# EUROPÄISCHE PATENTSCHRIFT

(11) **EP 3 411 426 B1**
(45) Veröffentlichungstag und Bekanntmachung des Hinweises auf die Patenterteilung: **14.08.2019**
(21) Anmeldenummer: 17702817.2
(22) Anmeldetag: 27.01.2017
(51) Int. Cl.: C08G 77/26

(54) **VERFAHREN ZUR HERSTELLUNG VON AMINOGRUPPEN AUFWEISENDEN ORGANOPOLYSILOXANEN**
METHOD FOR PRODUCING POLYORGANOSILOXANES HAVING AMINO GROUPS
PROCÉDÉ DE PRODUCTION D'ORGANOPOLYSILOXANES CONTENANT DES GROUPES AMINO

(30) Priorität: 03.02.2016 DE 102016201633
(43) Veröffentlichungstag der Anmeldung: 12.12.2018
(73) Patentinhaber: Wacker Chemie AG, 81737 München (DE)
(72) Erfinder: POPP, Alfred, 82008 Unterhaching (DE); SCHÄFER, Oliver, 84489 Burghausen (DE)
(74) Vertreter: Budczinski, Angelika
(86) Internationale Anmeldenummer: PCT/EP2017/051730
(87) Internationale Veröffentlichungsnummer: WO 2017/133969

(56) Entgegenhaltungen:
- DE-A1-102012 207 062
- US-A1- 2015 141 686

## Beschreibung

Die Erfindung betrifft ein Verfahren zur Herstellung von Aminogruppen aufweisenden Organopolysiloxanen durch Hydrolyse von Organyloxysilanen.

Verfahren zur Herstellung von Aminogruppen aufweisenden Organosiliciumverbindungen sind bereits bekannt. In US 5461134 wird ein Äquilibrierverfahren zur Herstellung von Aminoalkylendständigen Siloxanen mit Kettenlängen von mehr als 70 Siliciumatomen beschrieben. Als Katalysator dient wasserfreies Tetramethylammoniumhydroxid-Aminopropyldimethyl-Silanolat.

CN 102775613 beschreibt ein Verfahren zur Herstellung von α,ω-Bis(aminopropyl)polydimethylsiloxan unter Verwendung von wasserfreiem cyclischen Siloxan und eines Siliconatkatalysators, der durch Einwirkung von Alkali auf Cyclosiloxan separat hergestellt wird.

US 2011301374 beschreibt ein Verfahren zur Herstellung von Aminogruppen aufweisenden Organopolysiloxanen, dadurch gekennzeichnet, dass Aminogruppen und Si-gebundene Hydroxylgruppen aufweisende Organosiliciumverbindungen, erhältlich durch Äquilibrierung von im Wesentlichen linearen, endständige SiC-gebundene Aminogruppen aufweisenden Organopolysiloxanen mit im Wesentlichen linearen, endständige Si-gebundene Hydroxylgruppen aufweisenden Organopolysiloxanen und/oder Cyclosiloxanen in Anwesenheit von Äquilibrierungskatalysatoren mit Silazanen umgesetzt werden.

US 2002049296, US 2007197757 und US 2008009590 beschreiben Verfahren zur Herstellung von aminofunktionellen Siloxanen, bei denen hydroxyfunktionalisierte Organosiloxane mit cyclischem Silazan (siehe beispielsweise US 2002042491) umgesetzt werden. US 2015112092 beschreibt ein Verfahren zur Herstellung von aminofunktionellen Polyorganosiloxanen, bei dem Organosiloxane, welche Si-OH-Gruppen enthalten, mit bezogen auf die Si-OH-Gruppen mindestens stöchiometrischen Mengen Monoalkoxy(aminoalkyl)-silanen in Gegenwart mindestens einer Säure als Katalysator umgesetzt werden.

US 2008234441 und US 2011301254 beschreiben Verfahren zur Herstellung von organisch modifizierten Siloxanen durch katalysierte Umsetzung von mindestens eine SiH-Gruppe aufweisenden Siloxanen mit einer eine Doppelbindung aufweisenden Verbindung, wobei die die Doppelbindung aufweisende Verbindung unter anderem auch Aminogruppen als Rest aufweisen kann.

All diesen Verfahren ist gemein, dass sie als Rohstoff lineare oder cyclische di-, oligo- oder polymere Siloxane einsetzen, die wiederum teilweise aufwändig aus den monomeren Silanen aufgebaut werden müssen. Darüber hinaus lässt sich bei den oben genannten Äquilibrierungsverfahren die Bildung von cyclischen Siloxanen nicht vermeiden, die wiederum aufwändig abgetrennt werden müssen. Ebenfalls nachteilig bei diesen Verfahren ist die Tatsache, dass hier entweder zusätzliche Katalysatoren verwendet werden, deren Inaktivierung und Abtrennung teilweise schwierig ist oder aber dass die Verfahren bei erhöhten Temperaturen durchgeführt werden müssen, was bei der Anwesenheit von Aminogruppen immer die Gefahr einer Verfärbung des Produktes

DE102012207062 offenbart ein Verfahren zur Herstellung von aminofunktionellen Polyorganosiloxanen, bei dem Organosiloxane, welche Si-OH-Gruppen enthalten, mit mindestens stöchiometrischen Mengen (bezogen auf die Si-OH-Gruppen) Monoalkoxy(aminoalkyl)silanen in Gegenwart mindestens einer Säure als Katalysator umgesetzt werden.

Gegenstand der Erfindung ist ein Verfahren zur Herstellung von Aminogruppen aufweisenden Organopolysiloxanen, bei dem
(A) Silane der allgemeinen Formel

   R¹-O-SiR₂-O-R¹ (I)

   mit
(B) Silanen der allgemeinen Formel

   (R³₂N)-X-SiR⁴₂-O-R² (II)

   und
(C) Wasser
   umgesetzt werden, wobei
   R gleich oder verschieden sein kann und einwertige, gegebenenfalls substituierte Kohlenwasserstoffreste bedeutet, in dem einander nicht benachbarte Methyleneinheiten durch Gruppen -O- oder -NH- ersetzt sein können,
   R¹ und R² unabhängig voneinander gleich oder verschieden sein können und einwertige, gegebenenfalls substituierte Kohlenwasserstoffreste bedeuten,
   R³ gleich oder verschieden sein kann und einen einwertigen, gegebenenfalls substituierte Kohlenwasserstoffrest oder Wasserstoffatom bedeutet,
   R⁴ gleich oder verschieden sein kann und einwertige, gegebenenfalls substituierte Kohlenwasserstoffreste bedeutet und
   X einen Alkylenrest mit 1 bis 20 Kohlenstoffatomen bedeutet, in dem einander nicht benachbarte Methyleneinheiten durch Gruppen -O- oder -NH- ersetzt sein können.

Im Rahmen der vorliegenden Erfindung sollen von dem Begriff Organopolysiloxane sowohl polymere, oligomere wie auch dimere Siloxane mit umfasst werden.

Bevorzugt werden bei dem erfindungsgemäßen Verfahren Aminogruppen aufweisende Organopolysiloxane der allgemeinen Formel

(R³₂N)-X-SiR⁴₂-O-[SiR₂-O]ₙ-SiR⁴₂-X-(NR³₂) (III)

erhalten mit R, R³, R⁴ und X gleich einer der obengenannten Bedeutungen und n gleich 0 oder einer ganzen Zahl größer 0.

Beispiele für Kohlenwasserstoffrest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Beispiele für substituierte Kohlenwasserstoffreste R sind Halogenalkylreste, wie der 3,3,3-Trifluor-n-propylrest, der 2,2,2,2',2',2'-Hexafluor-isopropylrest und der Heptafluorisopropylrest, Halogenarylreste, wie der o-, m- und p-Chlorphenylrest, Alkylreste mit Ethersauerstoffen wie z. B. Alkoxyalkylreste wie der 2-Methoxyethylrest, sowie Alkylreste mit Aminogruppen wie z. B. Aminoalkylenaminoalkylreste wie der N-(2-Aminoethyl)-3-aminopropylrest oder der 3-Aminopropylrest.

Bevorzugt handelt es sich bei Rest R um gegebenenfalls mit Aminogruppen substituierte Kohlenwasserstoffreste mit 1 bis 20 Kohlenstoffatomen, besonders bevorzugt um den Methyl-, Ethyl-, Phenyl- oder 3-Aminopropylrest, insbesondere um den Methylrest. Beispiele für Kohlenwasserstoffreste R¹ und R² sind die für Rest R oben angegebenen Reste.

Beispiele für substituierte Kohlenwasserstoffreste R¹ und R² sind Halogenalkylreste, wie der 3,3,3-Trifluor-n-propylrest, der 2,2,2,2',2',2'-Hexafluor-isopropylrest und der Heptafluorisopropylrest, Halogenarylreste, wie der o-, m- und p-Chlorphenylrest sowie Alkylreste mit Ethersauerstoffen wie z.B. Alkoxyalkylreste wie der 2-Methoxyethylrest.

Bevorzugt handelt es sich bei den Resten R¹ und R² unabhängig voneinander um Kohlenwasserstoffreste mit 1 bis 20 Kohlenstoffatomen, besonders bevorzugt um den Methyl-, Ethyl- oder den Phenylrest, insbesondere den Methyl- oder den Ethylrest.

Beispiele für Kohlenwasserstoffreste R³ sind die für Rest R oben angegebenen Reste.

Beispiele für substituierte Kohlenwasserstoffreste R³ sind Halogenalkylreste, wie der 3,3,3-Trifluor-n-propylrest, der 2,2,2,2',2',2'-Hexafluor-isopropylrest und der Heptafluorisopropylrest, Halogenarylreste, wie der o-, m- und p-Chlorphenylrest, Alkylreste mit Ethersauerstoffen wie z.B. Alkoxyalkylreste wie der 2-Methoxyethylrest, sowie Alkylreste mit Aminogruppen wie z.B. Aminoalkylenaminoalkyreste wie der N-(2-Aminoethyl)-3-aminopropylrest.

Bevorzugt handelt es sich bei Rest R³ um Wasserstoffatom oder gegebenenfalls mit Aminogruppen substituierte Kohlenwasserstoffreste mit 1 bis 20 Kohlenstoffatomen, besonders bevorzugt um Wasserstoffatom.

Beispiele für Kohlenwasserstoffreste R⁴ sind die für Rest R oben angegebenen Reste.

Beispiele für substituierte Kohlenwasserstoffreste R⁴ sind Halogenalkylreste, wie der 3,3,3-Trifluor-n-propylrest, der 2,2,2,2',2',2'-Hexafluor-isopropylrest und der Heptafluorisopropylrest, Halogenarylreste, wie der o-, m- und p-Chlorphenylrest sowie Alkylreste mit Ethersauerstoffen wie z. B. Alkoxyalkylreste wie der 2-Methoxyethylrest.

Bevorzugt handelt es sich bei Kohlenwasserstoffrest R⁴ um Kohlenwasserstoffreste mit 1 bis 20 Kohlenstoffatomen, besonders bevorzugt um den Methyl-, Ethyl- oder den Phenylrest, insbesondere um den Methylrest.

Vorzugsweise bedeutet X einen Alkylenrest mit 1 bis 10 Kohlenstoffatomen, besonders bevorzugt um den Methylen- oder n-Propylenrest, insbesondere um den n-Propylenrest.

Das erfindungsgemäße Verfahren hat den Vorteil, dass die Kettenlänge der Aminogruppen aufweisenden Organopolysiloxane und damit die Molekulargewichtsverteilung, also bevorzugt der gewünschte Bereich für Index n in Formel (III), gezielt nach dem erforderlichen Eigenschaftsprofil eingestellt werden kann, was insbesondere über das gewählte molare Verhältnis der Komponenten (I) und (II) erfolgt.

Vorzugsweise bedeutet Index n eine ganze Zahl von 1 bis 10 000, besonders bevorzugt von 1 bis 100, insbesondere von 1 bis 10.

Beispiele für Silane der Formel (I) sind Dimethoxydimethylsilan, Diethoxydimethylsilan, Dimethoxymethylphenylsilan, Dimethoxydiphenylsilan, 3-Aminopropylmethyldimethoxysilan, 3-Aminopropylmethyldiethoxysilan, N-(2-Aminoethyl)-3-aminopropyl-methyldimethoxysilan und N-(2-Aminoethyl)-3-aminopropyl-methyldiethoxysilan, wobei Dimethoxydimethylsilan, 3-Aminopropylmethyldimethoxysilan oder N-(2-Aminoethyl)-3-aminopropyl-methyldiethoxysilan bevorzugt und Dimethoxydimethylsilan besonders bevorzugt sind.

Beispiele für Silane der Formel (II) sind 3-Aminopropyldimethylmethoxysilan, 3-Aminopropyldimethylethoxysilan, N-(2-Aminoethyl)-3-aminopropyl-dimethylmethoxysilan und N-(2-Aminoethyl)-3-aminopropyl-dimethylethoxysilan, wobei 3-Aminopropyldimethylmethoxysilan oder 3-Aminopropyldimethylethoxysilan bevorzugt und 3-Aminopropyldimethylmethoxysilan besonders bevorzugt sind.

Bei den Silanen der Formeln (I) und (II) handelt es sich um handelsübliche Produkte bzw. sind sie nach in der Organosiliciumchemie gängigen Methoden herstellbar.

Beispiele für erfindungsgemäß eingesetztes Wasser (C) sind natürliche Wässer, wie z.B. Regenwasser, Grundwasser, Quellwasser, Flusswasser und Meerwasser, chemische Wässer, wie z.B. vollentsalztes Wasser, destilliertes oder (mehrfach) redestilliertes Wasser, Wässer für medizinische oder pharmazeutische Zwecke, wie z.B. gereinigtes Wasser (Aqua purificata; Pharm. Eur. 3), Aqua deionisata, Aqua destillata, Aqua bidestillata, Aqua ad injectionam oder Aqua conservata, Trinkwasser nach deutscher Trinkwasserverordnung und Mineralwässer, wobei es sich bei Wasser (C) bevorzugt um Trinkwasser handelt.

Bei dem erfindungsgemäßen Verfahren liegt das molare Verhältnis von Komponente (B) zu Komponente (A) bevorzugt im Bereich von 1:100000 bis 100000:1, besonders bevorzugt im Bereich von 1:100 bis 50:1, insbesondere im Bereich 1:10 bis 10:1.

Im erfindungsgemäßen Verfahren wird vorzugsweise die Reaktion unter Durchmischung durchgeführt. Hierbei können die dem Fachmann bekannten Mischverfahren angewendet werden. Beispielsweise kann die Durchmischung durch Rühren erfolgen.

Das Inkontaktbringen der Komponenten (A) und (B) mit Wasser (C) kann durch alle dem Fachmann bekannte Verfahren durchgeführt werden. Als Beispiel seien Mischrührwerke für eine diskontinuierliche Betriebsweise und statische Mischer für eine kontinuierliche Betriebsweise genannt. Bevorzugt wird bei dem erfindungsgemäßen Verfahren vor dem Inkontaktbringen eine Mischung der Komponenten (A) und (B) hergestellt. Das Gemisch der Komponenten (A) und (B) kann dann mit Wasser (C) gerührt oder geschüttelt werden, um eine besonders gute Verteilung der Bestandteile zu gewährleisten.

Das erfindungsgemäße Verfahren kann kontinuierlich, diskontinuierlich oder semikontinuierlich durchgeführt werden.

Eine bevorzugte Ausführungsform des erfindungsgemäßen Verfahrens ist das kontinuierliche Inkontaktbringen durch Durchleiten der Alkoxysilane der Formeln (I) und (II) und Wasser durch ein Reaktionsrohr in dem gegebenenfalls auch statische Mischer vorhanden sein können.

Das molare Verhältnis der Komponenten (A) und (B) zu Wasser (C) kann vom Fachmann gezielt mit Hinblick auf die gewünschten Eigenschaften des Endprodukts gewählt werden. Bevorzugt wird Wasser (C) mindestens stöchiometrisch in Bezug auf alle vorhandenen hydrolysierbaren Organyloxygruppen im Reaktionsgemisch eingesetzt. Besonders bevorzugt wird Wasser (C) in Bezug auf alle vorhandenen hydrolysierbaren Organyloxygruppen im molaren Überschuss verwendet, wobei nach der erfindungsgemäßen Umsetzung das überschüssige Wasser durch dem Fachmann bekannte Methoden wie Destillation oder Phasentrennung entfernt werden kann. Vorzugsweise liegt das molare Verhältnis der Summe der hydrolysierbaren Gruppen, insbesondere der Summe der hydrolysierbaren Gruppen der Komponenten (A) und (B), zu Wasser im Bereich von 2:1 bis 1:100, bevorzugt im Bereich von 1:1 bis 1:10, besonders bevorzugt im Bereich zwischen 1:1 und 1:5.

Falls erwünscht, kann das erfindungsgemäße Verfahren auch in Gegenwart eines gegenüber den Reaktionsteilnehmern inerten Lösungsmittels (D) durchgeführt werden, was jedoch nicht bevorzugt ist. Beispiele für solche Lösungsmittel sind bei 20°C und 1013 mbar flüssige Kohlenwasser- und Halogenkohlenwasserstoffe, wie Benzol, Toluol, Xylol, Methylenchlorid oder Petrolether.

Zusätzlich zu den Komponenten (A), (B) und (C) sowie gegebenenfalls (D) können beim erfindungsgemäßen Verfahren weitere Komponenten eingesetzt werden, wie z.B. Teilhydrolysate der Silane der Formel (I), was jedoch nicht bevorzugt ist. Falls beim erfindungsgemäßen Verfahren, insbesondere herstellungs- bzw. handhabungsbedingt, Teilhydrolysate der Silane der Formel (I) anwesend sind, handelt es sich um Mengen von bevorzugt maximal 10 Gew.-%, besonders bevorzugt maximal 5 Gew.-%, jeweils bezogen auf das eingesetzte Silan der Formel (I).

Falls beim erfindungsgemäßen Verfahren Teilhydrolysate vorhanden sind, handelt es sich bevorzugt um solche mit bis zu 6 Siliciumatomen.

Beim erfindungsgemäßen Verfahren werden zusätzlich zu den Komponenten (A), (B) und (C) sowie gegebenenfalls (D) und gegebenenfalls Teilhydrolysaten bevorzugt keine weiteren Komponenten eingesetzt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren kann in An- oder Abwesenheit von Schutzgas, wie beispielsweise Stickstoff oder Argon, durchgeführt werden, wobei die Durchführung unter Schutzgas bevorzugt ist, insbesondere unter Stickstoff.

Das erfindungsgemäße Verfahren wird vorzugsweise beim Druck der umgebenden Atmosphäre, also bei 900 bis 1100 mbar durchgeführt. Falls erwünscht oder erforderlich, kann das erfindungsgemäße Verfahren jedoch auch bei höheren Drücken, z.B. bei 1100 bis 5000 mbar, was z.B. schon durch den Druckaufbau in einem Loopreaktor der Fall sein kann, oder bei niedrigeren Drücken, z.B. bei 0,1 bis 900 mbar, was zur Einhaltung einer verhältnismäßig niedrigen Temperatur erwünscht sein kann, durchgeführt werden.

Vorzugsweise wird das erfindungsgemäße Verfahren bei Temperaturen im Bereich von 0° bis 200°C, besonders bevorzugt bei 20° bis 120°C, insbesondere bei 20° bis 80°C durchgeführt.

In einer bevorzugten Ausführungsform wird der bei der Umsetzung freiwerdende Alkohol während oder nach der Umsetzung aus dem Reaktionsgemisch entfernt. Die Entfernung erfolgt bevorzugt durch Destillation, beispielsweise durch Destillation unter vermindertem Druck. Die dem Fachmann bekannten Destillationstechniken, beispielsweise Gleichgewichtsdestillation über eine Kolonne, Kurzwegdestillation oder Dünnschichtverdampfung können hierzu verwendet werden. Abhängig von der Art des Alkohols kann die Abtrennung in Reinform oder als Azeotrop mit Wasser erfolgen. Des Weiteren kann die Entfernung des Alkohols durch Abtrennung der Wasserphase von der Siloxanphase durch einfache Phasentrennung, die gegebenenfalls durch Koaleszer verbessert werden kann, erfolgen.

Bei der Reaktion entstehende unerwünschte Verbindungen, wie beispielsweise Cyclosiloxane, können bei Bedarf durch alle dem Fachmann bekannte Verfahren entfernt werden. So können unerwünschte niedermolekulare Verbindungen einfach durch thermische Abtrennung entfernt werden. Die thermische Abtrennung kann kontinuierlich oder diskontinuierlich erfolgen. Bevorzugt erfolgt diese Abtrennung kontinuierlich. Besonders bevorzugt erfolgt die kontinuierliche Abtrennung mittels eines Kurzweg- oder Dünnschichtverdampfers. Die notwendigen Abtrennbedingungen (Temperatur, Druck, Verweildauer) ergeben sich aus den Eigenschaften des gewünschten Zielprodukts.

Auch können die gegebenenfalls vorhandenen Teilhydrolysate bei Bedarf durch alle dem Fachmann bekannten Verfahren entfernt oder in das gewünschte Zielprodukt, beispielsweise durch Kondensation, umgewandelt werden.

Die erfindungsgemäß hergestellten Aminogruppen aufweisenden Organopolysiloxane sind bevorzugt transparente, farblose bis leicht gefärbte, niedrigviskose Öle.

Die erfindungsgemäß hergestellten Organopolysiloxane haben bei 25°C eine Viskosität von vorzugsweise kleiner 500 mm²/s, bevorzugt von 1 bis 100 mm²/s, besonders bevorzugt 4 bis 50 mm²/s.

Die gewünschte Aminzahl (AZ) des erfindungsgemäß hergestellten Produkts kann vorteilhafterweise durch geeignete Wahl der Komponenten (A) und (B) eingestellt werden. Die Aminzahlen der erfindungsgemäß hergestellten Aminogruppen aufweisenden Organopolysiloxane liegen dabei bevorzugt im Bereich von 0,1 mgKOH/g bis 455 mgKOH/g, besonders bevorzugt im Bereich 9 mgKOH/g bis 450 mgKOH/g, insbesondere im Bereich 100 mgKOH/g bis 400 mgKOH/g.

Die Amin-Zahl gibt an, wieviel Milligramm Kaliumhydroxid dem Amin-Anteil eines Gramms Substanz äquivalent ist.

Die erfindungsgemäß hergestellten Aminosiloxane können für alle Zwecke eingesetzt werden, für die auch bisher Aminosiloxane eingesetzt worden sind.

Das erfindungsgemäße Verfahren hat den Vorteil, dass es sehr einfach in der Durchführung ist und die Kettenlänge gezielt eingestellt werden kann.

Des Weiteren hat das erfindungsgemäße Verfahren den Vorteil, dass es sehr gut reproduzierbare Produktzusammensetzungen liefert.

Das erfindungsgemäße Verfahren hat den Vorteil, dass einfach verfügbare technische Rohstoffe eingesetzt werden können.

Ein weiterer Vorteil des erfindungsgemäßen Verfahrens liegt in den bevorzugt kurzen Reaktionszeiten bei einer variablen Reaktionsführung.

Ein weiterer Vorteil des erfindungsgemäßen Verfahrens liegt darin begründet, dass keine Katalysatoren zugesetzt werden müssen, die im Anschluss an die Reaktion mühsam abgetrennt werden müssen oder gegebenenfalls im Produkt verbleiben.

Das erfindungsgemäße Verfahren hat den Vorteil, dass die Molekulargewichtsverteilung der Organopolysiloxane konstant reproduzierbar ist.

In den nachfolgenden Beispielen beziehen sich alle Angaben von Teilen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

In den nachfolgenden Beispielen werden alle Arbeiten unter Stickstoff als Schutzgas durchgeführt.

### Beispiel 1

In einen 1000 ml-Dreihalsrundkolben mit Innenthermometer, mechanischem Rührer, Tropftrichter und Schutzgaseinlass wurden 150 g Wasser bei 25°C vorgelegt. Zum Wasser wird eine Mischung aus 352,9 g 3-Aminopropyldimethylmethoxysilan und 144 g Dimethoxydimethylsilan mit einer Geschwindigkeit zugetropft, so dass die Innentemperatur 50°C nicht überschritten wird. Die Mischung wird nach Abkühlen auf 25°C anschließend 12 h bei dieser Temperatur gerührt und danach im Vakuum (20 mbar) und 100°C von den flüchtigen Bestandteilen Methanol und Wasser befreit.

Man erhält 388 g eines dünnflüssigen Öls in Analogie zu Formel (III) mit folgender gaschromatographisch (Säulenparameter: AGILENT DB-5, 25 m, 0,32 mm, 0,52 µm; Injektor: HP6890 Front Injector; Detektor: WLD) bestimmten Zusammensetzung

| | |
|---|---|
| n = 0 | 43,2 % |
| n = 1 | 25,6 % |
| n = 2 | 12,8 % |
| n = 3 | 6,4 % |
| n = 4 | 3,1 % |
| n = 5 | 1,5 % |
| n = 6 | 0,6 % |
| n = 7 | 0,3 % |
| n = 8 | 0,1 % |

und folgenden Parametern:

| | | | |
|---|---|---|---|
| Viskosität | (DIN 51562-1) | 5,86 | mm²/s |
| Aminzahl | (DIN 53176) | 338 | mgKOH/g |
| Farbzahl-Hazen | (DIN EN ISO 6271) | 18 | |

### Beispiel 2

In einen 1000 ml-Dreihalsrundkolben mit Innenthermometer, mechanischem Rührer, Tropftrichter und Schutzgaseinlass wurden 130 g Wasser bei 25 °C vorgelegt. Zum Wasser wird eine Mischung aus 176,5 g 3-Aminopropyldimethylmethoxysilan und 144 g Dimethoxydimethylsilan mit einer Geschwindigkeit zugetropft, so dass die Innentemperatur 50°C nicht überschritten wird. Die Mischung wird nach Abkühlen auf 25 °C anschließend 12 h bei dieser Temperatur gerührt und danach im Vakuum (20 mbar) und 100°C von den flüchtigen Bestandteilen Methanol und Wasser befreit.

Man erhält 232 g eines dünnflüssigen Öls in Analogie zu Formel (III) mit folgender gaschromatographisch (Säulenparameter: AGILENT DB-5, 25 m, 0,32 mm, 0,52 µm; Injektor: HP6890 Front Injector; Detektor: WLD) bestimmten Zusammensetzung

| | |
|---|---|
| n = 0 | 28,1 % |
| n = 1 | 21,6 % |
| n = 2 | 15,1 % |
| n = 3 | 10,3 % |
| n = 4 | 6,8 % |
| n = 5 | 4,6 % |
| n = 6 | 2,9 % |
| n = 7 | 1,8 % |
| n = 8 | 1,1 % |

und folgendem Parametern:

| | | | |
|---|---|---|---|
| Viskosität | (DIN 51562-1) | 7,04 | mm²/s |
| Aminzahl | (DIN 53176) | 286 | mgKOH/g |
| Farbzahl-Hazen | (DIN EN ISO 6271) | 33 | |

### Beispiel 3

In einen 1000 ml-Dreihalsrundkolben mit Innenthermometer, mechanischem Rührer, Tropftrichter und Schutzgaseinlass wurden 100 g Wasser bei 25 °C vorgelegt. Zum Wasser wird eine Mischung aus 88,2 g 3-Aminopropyldimethylmethoxysilan und 144 g Dimethoxydimethylsilan mit einer Geschwindigkeit zugetropft, so dass die Innentemperatur 50°C nicht überschritten wird. Die Mischung wird nach Abkühlen auf 25 °C anschließend 12 h bei dieser Temperatur gerührt und danach im Vakuum (20 mbar) und 100°C von den flüchtigen Bestandteilen Methanol und Wasser befreit.

Man erhält 154 g eines dünnflüssigen Öls in Analogie zu Formel (III) mit folgender gaschromatographisch (Säulenparameter: AGILENT DB-5, 25 m, 0,32 mm, 0,52 µm; Injektor: HP6890 Front Injector; Detektor: WLD) bestimmten Zusammensetzung

| | |
|---|---|
| n = 0 | 16,8 % |
| n = 1 | 15,8 % |
| n = 2 | 13,1 % |
| n = 3 | 10,8 % |
| n = 4 | 8,6 % |
| n = 5 | 6,9 % |
| n = 6 | 5,4 % |
| n = 7 | 4,5 % |
| n = 8 | 4,4 % |

und folgendem Parametern:

| | | | |
|---|---|---|---|
| Viskosität | (DIN 51562-1) | 8, 95 | mm²/s |
| Aminzahl | (DIN 53176) | 214 | mgKOH/g |
| Farbzahl-Hazen | (DIN EN ISO 6271) | 20 | |

### Beispiel 4

In einen 1000 ml-Dreihalsrundkolben mit Innenthermometer, mechanischem Rührer, Tropftrichter und Schutzgaseinlass wurden 100 g Wasser bei 25°C vorgelegt. Zum Wasser wird eine Mischung aus 231 g 3-Aminopropyldimethylmethoxysilan und 150 g 3-Aminopropylmethyldimethoxysilan mit einer Geschwindigkeit zugetropft, so dass die Innentemperatur 50°C nicht überschritten wird. Die Mischung wird nach Abkühlen auf 25°C anschließend 12 h bei dieser Temperatur gerührt und danach im Vakuum (20 mbar) und 100°C von den flüchtigen Bestandteilen Methanol und Wasser befreit. Man erhält 283 g eines dünnflüssigen Öls mit folgenden Parametern:

| | | | |
|---|---|---|---|
| Viskosität | (DIN 51562-1) | 16 | mm²/s |
| Aminzahl | (DIN 53176) | 458 | mgKOH/g |
| Farbzahl-Hazen | (DIN EN ISO 6271) | 32 | |

## Patentansprüche

1. Verfahren zur Herstellung von Aminogruppen aufweisenden Organopolysiloxanen, bei dem
(A) Silane der allgemeinen Formel
R¹-O-SiR₂-O-R¹ (I)
mit
(B) Silanen der allgemeinen Formel
(R³₂N)-X-SiR⁴₂-O-R² (II)
und
(C) Wasser
umgesetzt werden, wobei
R gleich oder verschieden sein kann und einwertige, gegebenenfalls substituierte Kohlenwasserstoffreste bedeutet, in dem einander nicht benachbarte Methyleneinheiten durch Gruppen -O- oder -NH- ersetzt sein können,
R¹ und R² unabhängig voneinander gleich oder verschieden sein können und einwertige, gegebenenfalls substituierte Kohlenwasserstoffreste bedeuten,
R³ gleich oder verschieden sein kann und einen einwertigen, gegebenenfalls substituierte Kohlenwasserstoffrest oder Wasserstoffatom bedeutet,
R⁴ gleich oder verschieden sein kann und einwertige, gegebenenfalls substituierte Kohlenwasserstoffreste bedeutet und
X einen Alkylenrest mit 1 bis 20 Kohlenstoffatomen, in dem einander nicht benachbarte Methyleneinheiten durch Gruppen -O- oder -NH- ersetzt sein können.

2. Verfahren gemäß Anspruch 1, **dadurch gekennzeichnet, dass** es sich bei Rest R³ um Wasserstoffatom handelt.

3. Verfahren gemäß Anspruch 1 oder 2, **dadurch gekennzeichnet, dass** das molare Verhältnis von Komponente (B) zu Komponente (A) im Bereich von 1:100000 bis 100000:1 liegt.

4. Verfahren gemäß einem oder mehreren der Ansprüche 1 bis 3, **dadurch gekennzeichnet, dass** das molare Verhältnis der Summe der hydrolysierbaren Gruppen zu Wasser im Bereich von 1:1 bis 1:10 liegt.

5. Verfahren gemäß einem oder mehreren der Ansprüche 1 bis 4, **dadurch gekennzeichnet, dass** es unter Schutzgas durchgeführt wird.

## Claims

1. Process for preparing organopolysiloxanes having amino groups, wherein
(A) silanes of the general formula
R¹-O-SiR₂-O-R¹ (I)
are reacted with
(B) silanes of the general formula
(R³₂N)-X-SiR⁴₂-O-R² (II)
and
(C) water,
where
the radicals R can be identical or different and are monovalent, optionally substituted hydrocarbon radicals in which nonadjacent methylene units can be replaced by -O- or -NH- groups,
R¹ and R² can, independently of one another, be identical or different and are monovalent, optionally substituted hydrocarbon radicals,
the radicals R³ can be identical or different and are each a monovalent, optionally substituted hydrocarbon radical or hydrogen atom,
the radicals R⁴ can be identical or different and are monovalent, optionally substituted hydrocarbon radicals and
X is an alkylene radical which has from 1 to 20 carbon atoms and in which nonadjacent methylene units can be replaced by -O- or -NH- groups.

2. Process according to Claim 1, **characterized in that** radical R³ is a hydrogen atom.

3. Process according to Claim 1 or 2, **characterized in that** the molar ratio of component (B) to component (A) is in the range from 1:100,000 to 100,000:1.

4. Process according to one or more of Claims 1 to 3, **characterized in that** the molar ratio of the sum of the hydrolysable groups to water is in the range from 1:1 to 1:10.

5. Process according to one or more of Claims 1 to 4, **characterized in that** it is carried out under protective gas.

## Revendications

1. Procédé de fabrication d'organopolysiloxanes comprenant des groupes amino, selon lequel
(A) des silanes de formule générale :
R¹-O-SiR₂-O-R¹ (I)
sont mis en réaction avec
(B) des silanes de formule générale :
(R³₂N)-X-SiR⁴₂-O-R² (II)
et
(C) de l'eau, dans lesquelles
les R peuvent être identiques ou différents, et signifient des radicaux hydrocarbonés monovalents, éventuellement substitués, dans lesquels des unités méthylène non voisines les unes des autres peuvent être remplacées par des groupes -O- ou -NH-,
les R¹ et R² peuvent indépendamment les uns des autres être identiques ou différents, et signifient des radicaux hydrocarbonés monovalents, éventuellement substitués,
les R³ peuvent être identiques ou différents, et signifient un radical hydrocarboné monovalent, éventuellement substitué, ou un atome d'hydrogène,
les R⁴ peuvent être identiques ou différents, et signifient des radicaux hydrocarbonés monovalents, éventuellement substitués, et
X signifie un radical alkylène de 1 à 20 atomes de carbone, dans lequel des unités méthylène non voisines les unes des autres peuvent être remplacées par des groupes -O- ou -NH-.

2. Procédé selon la revendication 1, **caractérisé en ce que** le radical R³ consiste en un atome d'hydrogène.

3. Procédé selon la revendication 1 ou 2, **caractérisé en ce que** le rapport molaire entre le composant (B) et le composant (A) se situe dans la plage allant de 1:100 000 à 100 000:1.

4. Procédé selon une ou plusieurs des revendications 1 à 3, **caractérisé en ce que** le rapport molaire entre la somme des groupes hydrolysables et l'eau se situe dans la plage allant de 1:1 à 1:10.

5. Procédé selon une ou plusieurs des revendications 1 à 4, **caractérisé en ce qu'**il est réalisé sous un gaz protecteur.
